# FASCICULE DE BREVET EUROPEEN

(11) **EP 4 175 119 B1**
(45) Date de publication et mention de la délivrance du brevet: **20.11.2024**
(21) Numéro de dépôt: 22204013.1
(22) Date de dépôt: 27.10.2022
(51) Int. Cl.: H02J 7/35, H02J 7/00, E06B 9/72, E06B 9/24, E06B 9/68

(54) **DISPOSITIF D'ENTRAÎNEMENT MOTORISÉ, DISPOSITIF D'OCCULTATION ET PROCÉDÉ DE COMMANDE ASSOCIÉS**
MOTORISIERTE ANTRIEBSVORRICHTUNG, VERDUNKELUNGSVORRICHTUNG UND STEUERUNGSVERFAHREN DAFÜR
MOTORISED DRIVE DEVICE, ASSOCIATED CONCEALMENT DEVICE AND CONTROL METHOD

(30) Priorité: 28.10.2021 FR 2111467
(43) Date de publication de la demande: 03.05.2023
(73) Titulaire: SOMFY ACTIVITES SA, 74300 Cluses (FR)
(72) Inventeur: TINE, Damien, 74300 CLUSES (FR); BOSSE, Ben, 74300 CLUSES (FR)
(74) Mandataire: Lavoix

(56) Documents cités:
- FR-A1- 3 088 362
- US-A- 4 620 140
- US-A1- 2014 145 511

## Description

La présente invention concerne un dispositif d'entraînement motorisé, en particulier pour un dispositif d'occultation, autrement dit un dispositif d'entraînement motorisé d'un dispositif d'occultation, un dispositif d'occultation comprenant un tel dispositif d'entraînement motorisé, ainsi qu'un procédé de commande en fonctionnement d'un tel dispositif d'entraînement motorisé.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document US 4 620 140 A qui décrit un dispositif d'entraînement motorisé. Le dispositif d'entraînement motorisé comprend un actionneur électromécanique, une unité électronique de contrôle et un dispositif d'alimentation en énergie électrique. L'actionneur électromécanique comprend un moteur électrique. Le dispositif d'alimentation en énergie électrique comprend une batterie et un panneau photovoltaïque. L'unité électronique de contrôle comprend un dispositif de mesure d'une tension fournie par le panneau photovoltaïque et un dispositif d'inhibition du dispositif de mesure. L'unité électronique de contrôle et le moteur électrique sont alimentés en énergie électrique à partir de la batterie. La batterie est alimentée en énergie électrique au moyen du panneau photovoltaïque. En outre, le microcontrôleur comprend un port d'entrée de lecture de la tension fournie par le panneau photovoltaïque et mesurée par le dispositif de mesure.

Cependant, ce dispositif d'entraînement motorisé présente l'inconvénient de mesurer une tension à vide du panneau photovoltaïque, à partir du dispositif de mesure, pour déterminer une température, afin de compenser un signal de commande du moteur électrique, le signal de commande étant déterminé au moyen d'un dispositif de détection d'un courant de court-circuit du panneau photovoltaïque.

Ainsi, le moteur électrique est commandé par le signal de commande qui est dépendant de l'ensoleillement du panneau photovoltaïque.

En outre, la vitesse de rotation de ce moteur électrique est ajustée par le signal de commande compensé qui est dépendant de la température.

Par ailleurs, ce dispositif d'entraînement motorisé présente l'inconvénient de déconnecter électriquement le moteur électrique par rapport au panneau photovoltaïque, au moyen d'un premier interrupteur, pendant la mesure de la tension à vide du panneau photovoltaïque par le dispositif de mesure, le dispositif de mesure étant activé au moyen d'un deuxième interrupteur.

Ainsi, le deuxième interrupteur déconnecte électriquement le dispositif de mesure, lorsqu'aucune mesure de la tension à vide du panneau photovoltaïque n'est mise en oeuvre par le dispositif de mesure.

Cette déconnexion électrique du dispositif de mesure pendant le fonctionnement du moteur électrique a pour effet de diminuer des pertes en énergie électrique dans le dispositif de mesure en comparaison à un cas où le dispositif de mesure resterait connecté électriquement pendant le fonctionnement du moteur électrique.

Par ailleurs, ce dispositif d'entraînement motorisé présente l'inconvénient que le deuxième interrupteur du dispositif d'inhibition est mécanique.

On connaît également le document US 2014/0145511 A1 qui décrit un dispositif d'entraînement motorisé. Le dispositif d'entraînement motorisé comprend un actionneur électromécanique, une unité électronique de contrôle et un dispositif d'alimentation en énergie électrique. L'actionneur électromécanique comprend un moteur électrique. Le dispositif d'alimentation en énergie électrique comprend une batterie et un panneau photovoltaïque. L'unité électronique de contrôle comprend un dispositif de mesure d'une tension fournie par le panneau photovoltaïque. L'unité électronique de contrôle et le moteur électrique sont alimentés en énergie électrique à partir de la batterie. La batterie est alimentée en énergie électrique au moyen du panneau photovoltaïque. En outre, le microcontrôleur comprend un port d'entrée de lecture de la tension fournie par le panneau photovoltaïque et mesurée par le dispositif de mesure.

La présente invention a pour but de résoudre les inconvénients précités et de proposer un dispositif d'entraînement motorisé, un dispositif d'occultation comprenant un tel dispositif d'entraînement motorisé, ainsi qu'un procédé de commande en fonctionnement d'un tel dispositif d'entraînement motorisé, permettant d'inhiber un dispositif de mesure d'une tension d'un panneau photovoltaïque d'un dispositif d'alimentation en énergie électrique du dispositif d'entraînement motorisé, tout en maintenant continuellement connectés électriquement le dispositif de mesure et le panneau photovoltaïque.

A cet égard, la présente invention vise, selon un premier aspect, un dispositif d'entraînement motorisé comprenant au moins :
- un actionneur électromécanique,
- une unité électronique de contrôle, et
- un dispositif d'alimentation en énergie électrique,

l'actionneur électromécanique comprenant au moins un moteur électrique,
le dispositif d'alimentation en énergie électrique comprenant au moins :
   - une batterie, l'unité électronique de contrôle et le moteur électrique étant alimentés en énergie électrique à partir de la batterie, et
   - un panneau photovoltaïque, la batterie étant alimentée en énergie électrique au moyen du panneau photovoltaïque,
l'unité électronique de contrôle comprenant au moins :
   - un microcontrôleur,
   - un dispositif de mesure d'une tension fournie par le panneau photovoltaïque, le dispositif de mesure étant relié électriquement au panneau photovoltaïque, le microcontrôleur comprenant au moins un port d'entrée de lecture de la tension fournie par le panneau photovoltaïque et mesurée par le dispositif de mesure, et
   - un dispositif d'inhibition du dispositif de mesure.

Selon l'invention, le dispositif d'inhibition est relié électriquement, d'une part, au dispositif de mesure et, d'autre part, au port d'entrée du microcontrôleur. Le dispositif d'inhibition comprend au moins un transistor. En outre, le transistor est configuré pour forcer le port d'entrée du microcontrôleur à une valeur prédéterminée, de sorte à bloquer la valeur lue par le port d'entrée du microcontrôleur à la valeur prédéterminée.

Ainsi, le transistor permet d'inhiber le dispositif de mesure de la tension du panneau photovoltaïque, tout en maintenant continuellement connectés électriquement le dispositif de mesure et le panneau photovoltaïque.

De cette manière, le dispositif de mesure n'est à aucun instant déconnecté électriquement du panneau photovoltaïque par un organe de coupure, tel qu'un interrupteur, comme cela est mentionné dans le document US 4 620 140 A.

En outre, le transistor rend, autrement dit est configuré pour rendre, impossible une lecture d'une mesure de la tension du panneau photovoltaïque par le port d'entrée du microcontrôleur, dès que le transistor est activé, autrement dit dès que le port d'entrée du microcontrôleur est forcé à la valeur prédéterminée.

Selon une caractéristique avantageuse de l'invention, le transistor est configuré pour forcer le port d'entrée du microcontrôleur à la valeur prédéterminée suite à la mise en service du dispositif d'entraînement motorisé.

Selon une autre caractéristique avantageuse de l'invention, l'unité électronique de contrôle comprend, en outre, une diode. La diode est reliée électriquement, d'une part, au panneau photovoltaïque et, d'autre part, à la batterie. Le dispositif de mesure est relié électriquement, d'une part, à une liaison électrique entre le panneau photovoltaïque et la batterie et, d'autre part, à une masse, en parallèle au panneau photovoltaïque et à la batterie. En outre, le dispositif de mesure est connecté électriquement au panneau photovoltaïque et à la diode.

Selon une autre caractéristique avantageuse de l'invention, le dispositif de mesure comprend au moins un pont diviseur de tension.

Selon une autre caractéristique avantageuse de l'invention, le microcontrôleur comprend, en outre, au moins un port de sortie de commande du transistor. En outre, le transistor est configuré pour forcer le port d'entrée du microcontrôleur à la valeur prédéterminée suite à une commande de forçage à la valeur prédéterminée émise par le port de sortie du microcontrôleur au transistor.

Selon une autre caractéristique avantageuse de l'invention, le transistor comprend :
- une première broche, la première broche étant reliée électriquement au port de sortie du microcontrôleur,
- une deuxième broche, la deuxième broche étant connectée électriquement à un point milieu du pont diviseur de tension et au port d'entrée du microcontrôleur, et
- une troisième broche, la troisième broche étant reliée électriquement à une masse de l'unité électronique de contrôle.

Selon une autre caractéristique avantageuse de l'invention, l'unité électronique de contrôle comprend, en outre, une résistance de protection, la résistance de protection étant reliée électriquement, d'une part, au port de sortie du microcontrôleur et, d'autre part, à la première broche du transistor.

La présente invention vise, selon un deuxième aspect, un dispositif d'occultation comprenant au moins :
- un écran, et
- un dispositif d'entraînement motorisé.

Selon l'invention, le dispositif d'entraînement motorisé est conforme à l'invention et tel que mentionné ci-dessus. L'écran est configuré pour être entraîné en déplacement par l'actionneur électromécanique du dispositif d'entraînement motorisé.

Ce dispositif d'occultation présente des caractéristiques et avantages analogues à ceux décrits précédemment en relation avec le dispositif d'entraînement motorisé selon l'invention et tel que mentionné ci-dessus.

Selon une caractéristique avantageuse de l'invention, le dispositif d'occultation comprend, en outre, un tube d'enroulement. L'écran est enroulable sur le tube d'enroulement. En outre, le tube d'enroulement est agencé de sorte à être entraîné en rotation par l'actionneur électromécanique.

La présente invention vise, selon un troisième aspect, un procédé de commande en fonctionnement d'un dispositif d'entraînement motorisé d'un dispositif d'occultation,
le dispositif d'entraînement motorisé comprenant au moins :
   - un actionneur électromécanique,
   - une unité électronique de contrôle, et
   - un dispositif d'alimentation en énergie électrique,
l'actionneur électromécanique comprenant au moins un moteur électrique,
le dispositif d'alimentation en énergie électrique comprenant au moins :
   - une batterie, l'unité électronique de contrôle et le moteur électrique étant alimentés en énergie électrique à partir de la batterie, et
   - un panneau photovoltaïque, la batterie étant alimentée en énergie électrique au moyen du panneau photovoltaïque,
l'unité électronique de contrôle comprenant au moins :
   - un microcontrôleur,
   - un dispositif de mesure d'une tension fournie par le panneau photovoltaïque, le dispositif de mesure étant relié électriquement au panneau photovoltaïque, le microcontrôleur comprenant au moins un port d'entrée de lecture de la tension fournie par le panneau photovoltaïque et mesurée par le dispositif de mesure, et
   - un dispositif d'inhibition du dispositif de mesure.

Selon l'invention, le dispositif d'inhibition est relié électriquement, d'une part, au dispositif de mesure et, d'autre part, au port d'entrée du microcontrôleur. Le dispositif d'inhibition comprend au moins un transistor.

En outre, le procédé comprend au moins les étapes suivantes :
- forçage du port d'entrée du microcontrôleur à une valeur prédéterminée par le transistor, et
- blocage de la valeur lue par le port d'entrée du microcontrôleur à la valeur prédéterminée.

Ce procédé de commande présente des caractéristiques et avantages analogues à ceux décrits précédemment en relation avec le dispositif d'entraînement motorisé selon l'invention et tel que mentionné ci-dessus.

Selon une caractéristique avantageuse de l'invention, le port d'entrée du microcontrôleur est forcé à la valeur prédéterminée par le transistor suite à la mise en service du dispositif d'entraînement motorisé.

Selon une autre caractéristique avantageuse de l'invention, le microcontrôleur comprend, en outre, au moins un port de sortie de commande du transistor. En outre, le port d'entrée du microcontrôleur est forcé à la valeur prédéterminée par le transistor suite à une commande de forçage à la valeur prédéterminée émise par le port de sortie du microcontrôleur au transistor.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation conforme à un mode de réalisation de l'invention, l'installation comprenant un dispositif d'occultation conforme à l'invention ;
[Fig 2] la figure 2 est une vue schématique en perspective de l'installation illustrée à la figure 1 ;
[Fig 3] la figure 3 est une vue schématique en coupe axiale et partielle de l'installation illustrée aux figures 1 et 2, montrant un actionneur électromécanique d'un dispositif d'entraînement motorisé du dispositif d'occultation de l'installation ; et
[Fig 4] la figure 4 est une vue schématique illustrant une partie d'un schéma électrique du dispositif d'entraînement motorisé du dispositif d'occultation de l'installation, illustré aux figures 1 à 3.

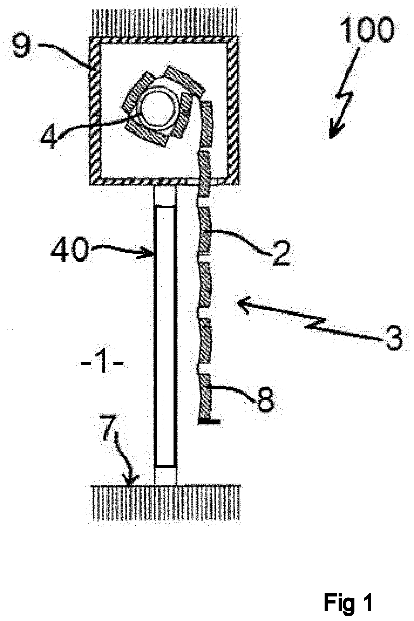

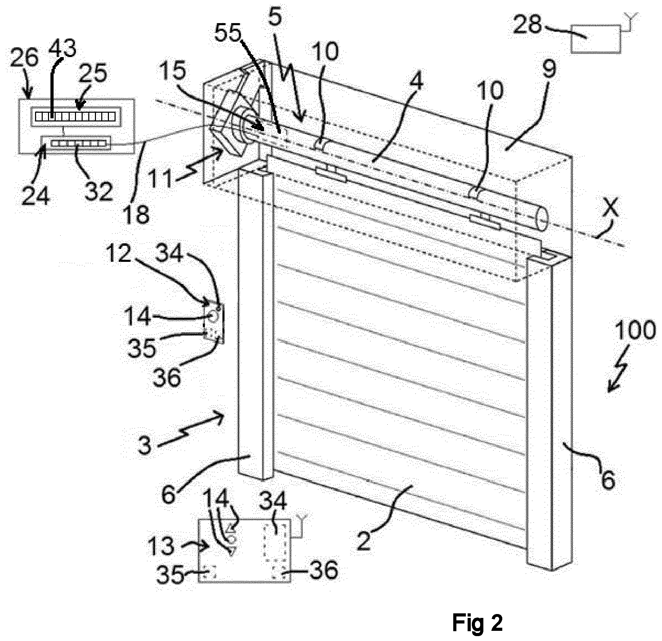

On décrit tout d'abord, en référence aux figures 1 et 2, une installation domotique 100 conforme à l'invention. Cette installation domotique 100 comprend au moins un dispositif de fermeture, d'occultation ou de protection solaire 3, conforme à un mode de réalisation l'invention. Cette installation domotique 100, installée dans un bâtiment, non représenté, comporte une ouverture 1, dans laquelle est disposée une fenêtre 40 ou une porte, qui n'est représentée qu'à la figure 1. Cette installation domotique 100 est équipée d'au moins un écran 2 appartenant au dispositif de fermeture, d'occultation ou de protection solaire 3, en particulier un volet roulant motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un volet roulant, un store en toile ou avec des lames orientables, un portail roulant, une grille, une porte ou encore un volet battant. La présente invention s'applique à tous les types de dispositif d'occultation.

On décrit, en référence aux figures 1 et 2, un volet roulant conforme au mode de réalisation de l'invention.

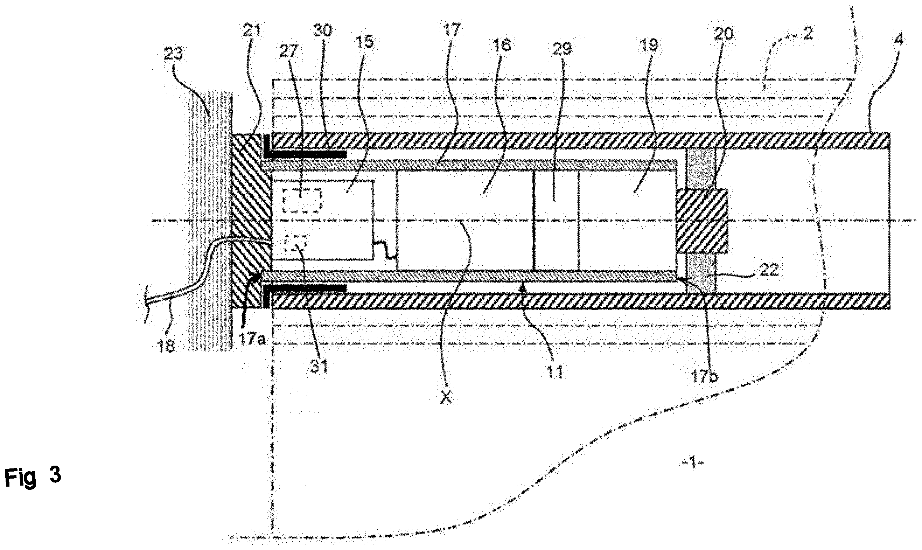

Le dispositif d'occultation 3 comprend un dispositif d'entraînement motorisé 5, conforme à l'invention. Le dispositif d'entraînement motorisé 5 comprend un actionneur électromécanique 11 illustré à la figure 3.

Avantageusement, le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6, représentées uniquement à la figure 2. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 11 est configuré pour entraîner, autrement dit entraîne, en déplacement l'écran 2, entre la première position de fin de course FdCH et la deuxième position de fin de course FdCB, et inversement.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation domotique 100 comprend soit l'unité de commande locale 12, soit l'unité de commande centrale 13, soit l'unité de commande locale 12 et l'unité de commande centrale 13.

On décrit à présent, plus en détail et en référence à la figure 3, le dispositif d'entraînement motorisé 5, y compris l'actionneur électromécanique 11, appartenant à l'installation domotique 100 et, plus particulièrement, au dispositif d'occultation 3 illustré aux figures 1 et 2.

L'actionneur électromécanique 11 comprend un moteur électrique 16.

Le moteur électrique 16 est représenté par son enveloppe à la figure 3, sans détails sur ses éléments constitutifs internes.

Avantageusement, le moteur électrique 16 comprend un rotor et un stator, non représentés et positionnés de manière coaxiale autour de l'axe de rotation X, qui est également l'axe de rotation du tube d'enroulement 4 en configuration montée du dispositif d'entraînement motorisé 5.

Ici, le moteur électrique 16 peut être de type sans balais à commutation électronique, appelé également « BLDC » (acronyme du terme anglo-saxon BrushLess Direct Current) ou « synchrone à aimants permanents », ou du type à courant continu.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Ici, le dispositif d'entraînement motorisé 5 comprend l'unité électronique de contrôle 15. En outre, l'unité électronique de contrôle 15 comprend le microcontrôleur 31.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou centrale 13. L'unité de commande locale 12 et/ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant de la fenêtre 40 ou d'une porte. Un point de commande nomade peut être une télécommande, un téléphone intelligent ou une tablette.

Avantageusement, l'unité de commande locale 12 et/ou centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur, non représenté, et/ou à un signal provenant d'une horloge, non représentée, de l'unité électronique de contrôle 15, en particulier du microcontrôleur 31. Le capteur et/ou l'horloge peuvent être intégrés à l'unité de commande locale 12 ou à l'unité de commande centrale 13.

Avantageusement, l'actionneur électromécanique 11 comprend, en outre, un carter 17, en particulier tubulaire. Le moteur électrique 16 est monté à l'intérieur du carter 17, en particulier dans une configuration assemblée de l'actionneur électromécanique 11.

Ici, le carter 17 de l'actionneur électromécanique 11 est de forme cylindrique, notamment de révolution autour de l'axe de rotation X.

Avantageusement, le carter 17 est un tube.

Ici, le tube formant le carter 17 présente une section circulaire.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Le carter 17 est creux. Le carter 17 comprend une première extrémité 17a et une deuxième extrémité 17b. La deuxième extrémité 17b est opposée à la première extrémité 17a. Le carter 17 est ouvert à chacune de ses extrémités 17a, 17b.

Avantageusement, l'actionneur électromécanique 11 comprend, en outre, un arbre de sortie 20.

L'arbre de sortie 20 est disposé, autrement dit est configuré pour être disposé, au niveau de la deuxième extrémité 17b du carter 17, en particulier dans la configuration assemblée de l'actionneur électromécanique 11.

Avantageusement, l'actionneur électromécanique 11 comprend, en outre, un réducteur 19.

Le réducteur 19 est représenté par son enveloppe à la figure 3, sans détails sur ses éléments constitutifs internes.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Le réducteur 19 est accouplé, autrement dit est configuré pour être accouplé, avec le moteur électrique 16, en particulier avec le rotor du moteur électrique 16 et dans la configuration assemblée de l'actionneur électromécanique 11.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Ici et comme visible à la figure 3, en particulier dans la configuration assemblée de l'actionneur électromécanique 11, le frein 29 est configuré pour être disposé, autrement dit est disposé, entre le moteur électrique 16 et le réducteur 19, c'est-à-dire à la sortie du moteur électrique 16.

En variante, non représentée, en particulier dans la configuration assemblée de l'actionneur électromécanique 11, le frein 29 est configuré pour être disposé, autrement dit est disposé, entre l'unité électronique de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, le réducteur 19 et, éventuellement, le frein 29 sont disposés à l'intérieur du carter 17 de l'actionneur électromécanique 11, en particulier dans la configuration assemblée de l'actionneur électromécanique 11.

Avantageusement, l'actionneur électromécanique 11 comprend, en outre, une couronne 30. La couronne 30 est disposée, autrement dit est configurée pour être disposée, au niveau de la première extrémité 17a du carter 17, en particulier dans la configuration assemblée de l'actionneur électromécanique 11.

La couronne 30 constitue, autrement dit est configurée pour constituer, un palier de guidage en rotation du tube d'enroulement 4, en particulier dans une configuration assemblée du dispositif d'occultation 3.

Avantageusement, l'actionneur électromécanique 11 et, plus particulièrement, l'unité électronique de contrôle 15 comprend, en outre, un dispositif de détection d'obstacle et de fins de course, non représenté, lors de l'enroulement de l'écran 2 et lors du déroulement de cet écran 2, pouvant être mécanique ou électronique.

Avantageusement, le dispositif de détection d'obstacle et de fins de course est mis en oeuvre au moyen du microcontrôleur 31 de l'unité électronique de contrôle 15 et, en particulier, au moyen d'un algorithme mis en oeuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30 insérée autour de la première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend, en outre, un support de couple 21, pouvant également être appelé « tête d'actionneur » ou « point fixe ».

Le support de couple 21 obture, autrement dit est configuré pour obturer, la première extrémité 17a du carter 17, en particulier dans la configuration assemblée de l'actionneur électromécanique 11.

Ainsi, le support de couple 21 est disposé, autrement dit est configuré pour être disposé, au niveau de la première extrémité 17a du carter 17.

Avantageusement, le support de couple 21 est en saillie, au niveau de la première extrémité 17a du carter 17, en particulier l'extrémité 17a du carter 17 recevant la couronne 30.

Ainsi, une première partie du support de couple 21 est disposée à l'intérieur du carter 17 et une deuxième partie du support de couple 21 est disposée à l'extérieur du carter 17.

Avantageusement, le support de couple 21 de l'actionneur électromécanique 11 est configuré pour fixer l'actionneur électromécanique 11 sur un bâti 23, en particulier à une joue du coffre 9.

Ainsi, le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Le support de couple 21 est fixé, autrement dit est configuré pour être fixé, au carter 17 au moyen d'un ou plusieurs éléments de fixation, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Par ailleurs, le support de couple 21 de l'actionneur électromécanique 11 peut permettre de supporter au moins une partie de l'unité électronique de contrôle 15.

Avantageusement, l'unité électronique de contrôle 15 peut être alimentée en énergie électrique au moyen d'un câble d'alimentation électrique 18.

Ici et tel qu'illustré à la figure 3, l'unité électronique de contrôle 15 est ainsi disposée, autrement dit est intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le coffre 9 ou dans le support de couple 21.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, pouvant être, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière est ou sont prévus, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17 opposée à la première extrémité 17a.

Avantageusement, l'arbre de sortie 20 de l'actionneur électromécanique 11 est configuré pour entraîner en rotation un élément de liaison 22. Cet élément de liaison 22 est relié au tube d'enroulement 4, en particulier dans la configuration assemblée du dispositif d'occultation 3. L'élément de liaison est, dans l'exemple des figures, réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

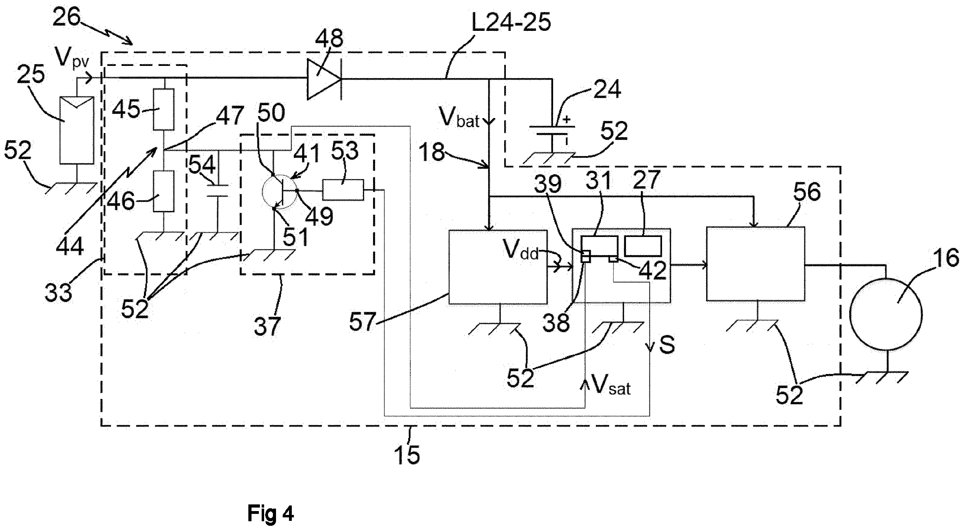

Le dispositif d'occultation 3 et, plus particulièrement, le dispositif d'entraînement motorisé 5 comprend, en outre, un dispositif d'alimentation en énergie électrique 26, visible à la figure 2 et dont un schéma électrique est représenté à la figure 4. L'actionneur électromécanique 11 est relié électriquement au dispositif d'alimentation en énergie électrique 26.

Le dispositif d'alimentation en énergie électrique 26 comprend au moins une batterie 24 et au moins un panneau photovoltaïque 25.

Le dispositif d'alimentation en énergie électrique 26 est configuré pour alimenter, autrement dit alimente, en énergie électrique l'actionneur électromécanique 11 et, plus particulièrement, l'unité électronique de contrôle 15 et le moteur électrique 16.

Ainsi, le dispositif d'alimentation en énergie électrique 26 permet d'alimenter en énergie électrique l'actionneur électromécanique 11, sans être lui-même relié électriquement à un réseau d'alimentation électrique du secteur.

Ici, le panneau photovoltaïque 25 est relié électriquement à la batterie 24, par une liaison électrique L24-25.

L'actionneur électromécanique 11 est relié électriquement au dispositif d'alimentation en énergie électrique 26 et, plus particulièrement, à la batterie 24, en particulier au moyen du câble d'alimentation électrique 18.

La batterie 24 est configurée pour alimenter, autrement dit alimente, en énergie électrique l'actionneur électromécanique 11, en particulier l'unité électronique de contrôle 15 et le moteur électrique 16. En outre, la batterie 24 est configurée pour être alimentée, autrement dit est alimentée, en énergie électrique par le panneau photovoltaïque 25.

Ainsi, le rechargement de la batterie 24 est mis en oeuvre par énergie solaire, au moyen du panneau photovoltaïque 25.

Avantageusement, la batterie 24 peut être disposée au niveau du coffre 9 du dispositif d'occultation 3.

Ici et comme illustré à la figure 2, la batterie 24 est disposée à l'extérieur du coffre 9.

En variante, non représentée, la batterie 24 peut être disposée à l'intérieur du coffre 9, à l'intérieur du tube d'enroulement 4 tout en étant à l'extérieur du carter 17, ou à l'intérieur du carter 17, en particulier dans la configuration assemblée de l'actionneur électromécanique 11. Dans ce dernier cas, l'actionneur électromécanique 11 comprend la batterie 24.

Lorsque le support de couple 21 comprend un dispositif d'affichage, le paramètre de fonctionnement que ce dispositif d'affichage permet de visualiser est avantageusement un état de charge de la batterie 24.

Ici, l'actionneur électromécanique 11 comprend le câble d'alimentation électrique 18 permettant son alimentation en énergie électrique, notamment l'alimentation électrique de l'unité électronique de contrôle 15 et l'alimentation électrique du moteur électrique 16, en particulier à partir de la batterie 24.

Ici, la batterie 24 est reliée électriquement directement à l'unité électronique de contrôle 15, par le câble d'alimentation électrique 18.

La batterie 24 est de type rechargeable.

Avantageusement, la batterie 24 comprend une pluralité d'éléments de stockage d'énergie 32, en particulier reliés électriquement en série. Les éléments de stockage d'énergie 32 de la batterie 24 peuvent être, notamment, des piles, autrement dit des accumulateurs.

Avantageusement, le panneau photovoltaïque 25 comprend une pluralité de cellules photovoltaïques 43. Dans ce cas, la batterie 24 est alimentée en énergie électrique au moyen des cellules photovoltaïques 43 du panneau photovoltaïque 25.

Le dispositif d'entraînement motorisé 5, en particulier le panneau photovoltaïque 25 et/ou l'unité électronique de contrôle 15, comprend des éléments de chargement configurés pour charger la batterie 24, à partir de l'énergie solaire récupérée par le panneau photovoltaïque 25. Dans ce cas, le courant circule entre les composants 15, 24 et 25 à travers une liaison filaire, pouvant être distincte du câble d'alimentation en énergie électrique 18.

Ainsi, les éléments de chargement configurés pour charger la batterie 24, à partir de l'énergie solaire, permettent de convertir l'énergie solaire récupérée par le panneau photovoltaïque 25 en énergie électrique.

En variante, en complément, le dispositif d'entraînement motorisé 5, en particulier l'actionneur électromécanique 11, est alimenté en énergie électrique à partir de la batterie 24, à partir d'une batterie auxiliaire, non représentée, ou à partir d'un réseau d'alimentation électrique du secteur, en particulier par le réseau alternatif commercial, notamment en fonction d'un état de charge de la batterie 24.

Ici, l'unité électronique de contrôle 15 comprend une seule carte électronique 55. En outre, la carte électronique 55 est configurée pour contrôler le moteur électrique 16, pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Comme mentionné ci-dessus, les éléments de chargement de la batterie 24 peuvent être disposés au niveau de la carte électronique 55.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique.

Dans le cas où l'unité électronique de contrôle 15 comprend une première carte électronique et une deuxième carte électronique, non représentées, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre une partie du support de couple 21 et le couvercle.

Avantageusement, le panneau photovoltaïque 25 peut être fixé sur le coffre 9, sur un mur du bâtiment, sur l'une des coulisses latérales 6, sur une vitre de la fenêtre 40 ou sur un cadre dormant de la fenêtre 40.

On décrit à présent, en référence à la figure 4, une partie d'un schéma électrique du dispositif d'entraînement motorisé 5 illustré aux figures 1 à 3, conforme à un mode de réalisation de l'invention.

Le panneau photovoltaïque 25 fournit, autrement dit est configuré pour fournir ou délivrer, une tension Vₚᵥ.

La batterie 24 fournit, autrement dit est configuré pour fournir ou délivrer, une tension V_{bat}.

L'unité électronique de contrôle 15 comprend, en outre, un dispositif de mesure 33 de la tension Vₚᵥ fournie par le panneau photovoltaïque 25 et un dispositif d'inhibition 37 du dispositif de mesure 33. Autrement dit, le dispositif de mesure 33 est configuré pour mesurer la tension Vₚᵥ fournie ou délivrée par le panneau photovoltaïque 25 et le dispositif d'inhibition 37 est configuré pour inhiber ou désactiver, de façon sélective, le dispositif de mesure 33.

Dans la présente description, l'expression « de façon sélective », autrement dit « par commutation », signifie que l'inhibition ou la désactivation du dispositif de mesure 33 est effective ou non, en fonction de l'état d'un organe du dispositif d'inhibition 37 qui opère cette désactivation ou inhibition.

Le dispositif de mesure 33 est relié électriquement au panneau photovoltaïque 25.

Le microcontrôleur 31 comprend au moins un port d'entrée 38 de lecture de la tension Vₚᵥ fournie par le panneau photovoltaïque 25 et mesurée par le dispositif de mesure 33. Autrement dit, le port d'entrée 38 du microcontrôleur 31 est configuré pour lire la tension Vₚᵥ fournie par le panneau photovoltaïque 25 et mesurée par le dispositif de mesure 33.

Avantageusement, le port d'entrée 38 du microcontrôleur 31 comprend un convertisseur analogique/numérique 39. Dans ce cas, le convertisseur analogique/numérique 39 est intégré au microcontrôleur 31.

En variante, non représentée, le port d'entrée 38 du microcontrôleur 31 est relié électriquement à un convertisseur analogique/numérique. Dans ce cas, le convertisseur analogique/numérique est un élément distinct du microcontrôleur 31.

Le dispositif d'inhibition 37 est relié électriquement, d'une part, au dispositif de mesure 33 et, d'autre part, au port d'entrée 38 du microcontrôleur 31. Autrement dit, le dispositif d'inhibition 37 est disposé entre le dispositif de mesure 33 et le port d'entrée 38 du microcontrôleur 31.

Le dispositif d'inhibition 37 comprend au moins un transistor 41. En outre, le transistor 41 est configuré pour forcer, autrement dit force, le port d'entrée 38 du microcontrôleur 31 à une valeur prédéterminée Vₛₐₜ, lorsque celui-ci est activé, de sorte à bloquer la valeur lue par le port d'entrée 38 du microcontrôleur 31 à la valeur prédéterminée Vₛₐₜ.

Ainsi, le transistor 41 permet, lorsqu'il est activé, d'inhiber le dispositif de mesure 33 de la tension Vₚᵥ du panneau photovoltaïque 25, tout en maintenant continuellement connectés électriquement le dispositif de mesure 33 et le panneau photovoltaïque 25.

De cette manière, le dispositif de mesure 33 n'est à aucun instant déconnecté électriquement du panneau photovoltaïque 25 par un organe de coupure, tel qu'un interrupteur, comme cela est mentionné dans le document US 4 620 140 A. De même, la batterie 24 n'est à aucun instant déconnectée électriquement du panneau photovoltaïque 25 par un organe de coupure, tel qu'un interrupteur, comme cela est mentionné dans le document US 4 620 140 A.

Autrement dit, le dispositif de mesure 33 est toujours connecté électriquement au panneau photovoltaïque 25. De même, la batterie 24 est toujours connectée électriquement au panneau photovoltaïque 25.

En outre, le transistor 41 rend, autrement dit est configuré pour rendre, impossible une lecture d'une mesure de la tension Vₚᵥ du panneau photovoltaïque 25 par le port d'entrée 38 du microcontrôleur 31, dès que le transistor 41 est activé, autrement dit dès que le port d'entrée 38 du microcontrôleur 31 est forcé à la valeur prédéterminée Vₛₐₜ.

Par conséquent, le transistor 41 permet de forcer à la valeur prédéterminée Vₛₐₜ la mesure de la tension Vₚᵥ du panneau photovoltaïque 25 lue au niveau du port d'entrée 38 du microcontrôleur 31, de sorte que le microcontrôleur 31 ne peut pas tenir compte de la valeur réelle mesurée par le dispositif de mesure 33, autrement dit à inhiber ou à désactiver le dispositif de mesure 33, du point de vue du microcontrôleur 31.

Avantageusement, le microcontrôleur 31 comprend, en outre, au moins un port de sortie 42 de commande du transistor 41. En outre, le transistor 41 est configuré pour forcer, autrement dit force, le port d'entrée 38 du microcontrôleur 31 à la valeur prédéterminée Vₛₐₜ suite à une commande de forçage à la valeur prédéterminée Vₛₐₜ émise par le port de sortie 42 du microcontrôleur 31 au transistor 41.

Ici, le port de sortie 42 du microcontrôleur 31 est configuré pour fournir, autrement dit fournit, soit une première valeur de tension de 0 volt soit une deuxième valeur de tension de 3,3 volts. Ce fonctionnement est de type binaire, avec deux valeurs logiques de sortie du microcontrôleur 31, respectivement égales à « 0 » et à « 1 ».

Ici, la valeur prédéterminée Vₛₐₜ de forçage correspond à la deuxième valeur de tension, soit 3,3 volts, autrement dit correspond à la valeur binaire de « 1 ». En outre, la première valeur de tension, soit 0 volt, correspond à la valeur binaire de « 0 ».

La deuxième valeur de tension fournie par le port de sortie du microcontrôleur n'est pas limitative et peut être différente. Elle peut être, par exemple, de 5 volts.

Avantageusement, le transistor 41 est configuré pour forcer, autrement dit force, le port d'entrée 38 du microcontrôleur 31 à la valeur prédéterminée Vₛₐₜ suite à la mise en service du dispositif d'entraînement motorisé 5.

Ainsi, le forçage à la valeur prédéterminée Vₛₐₜ de la mesure de la tension Vₚᵥ du panneau photovoltaïque 25 lue au niveau du port d'entrée 38 du microcontrôleur 31 est mise en oeuvre suite à la mise en service du dispositif d'entraînement motorisé 5

Avantageusement, le forçage à la valeur prédéterminée Vₛₐₜ de la mesure de la tension Vₚᵥ du panneau photovoltaïque 25 lue au niveau du port d'entrée 38 du microcontrôleur 31 est mise en oeuvre après un nombre de cycles prédéterminé d'activation de l'actionneur électromécanique 11, pouvant être, par exemple, de trois.

Le nombre de cycles prédéterminé d'activation de l'actionneur électromécanique, au-delà duquel a lieu le forçage à la valeur prédéterminée, n'est pas limitatif et peut être différent. Il peut être, par exemple, inférieur ou égal à deux ou supérieur ou égal à quatre.

Ici, un cycle d'activation de l'actionneur électromécanique 11 est une mise en fonctionnement de l'actionneur électromécanique 11 pendant une durée supérieure ou égale à une valeur de durée prédéterminée, par exemple égale à une seconde, et jusqu'à l'atteinte de la position de fin de course haute prédéterminée FdCH.

La durée prédéterminée n'est pas limitative et peut être différente. Elle peut être, par exemple, strictement supérieure ou égale à une seconde.

Ici, le transistor 41 est un transistor bipolaire, en particulier de type NPN (acronyme de l'expression Négatif-Positif-Négatif).

En variante, non représentée, le transistor 41 peut être un transistor bipolaire de type PNP (acronyme de l'expression Positif-Négatif-Positif).

Avantageusement, le dispositif de mesure 33 comprend au moins un pont diviseur de tension 44.

Ici, le pont diviseur de tension 44 comprend une première résistance 45 et une deuxième résistance 46. La première résistance 45 est reliée électriquement à la deuxième résistance 46. Le pont diviseur de tension 44 comprend un point milieu 47. Le point milieu 47 est situé entre la première résistance 45 et la deuxième résistance 46.

Ainsi, les première et deuxième résistances 45, 46 du pont diviseur de tension 44 permettent de mesurer, autrement dit de déterminer, une valeur de la tension Vₚᵥ du panneau photovoltaïque 25.

Avantageusement, le dispositif d'alimentation en énergie électrique 26 et, plus particulièrement, l'unité électronique de contrôle 15 comprend, en outre, une diode 48. La diode 48 est reliée électriquement, d'une part, au panneau photovoltaïque 25 et, d'autre part, à la batterie 24.

Avantageusement, la diode 48 fait partie intégrante de la liaison électrique L24-25 entre le panneau photovoltaïque 25 et la batterie 24.

Ici, la diode 48 est disposée entre le panneau photovoltaïque 25 et la batterie 24. La diode 48 est dite « passante » du panneau photovoltaïque 25 vers la batterie 24 et dite « bloquante » de la batterie 24 vers le panneau photovoltaïque 25.

Le dispositif de mesure 33 est relié électriquement à la liaison électrique L24-25 entre le panneau photovoltaïque 25 et la batterie 24 et à une masse 52, en parallèle au panneau photovoltaïque 25 et à la batterie 24. En outre, le dispositif de mesure 33 est connecté électriquement au panneau photovoltaïque 25 et à la diode 48.

Ici, la diode 48 permet, notamment, d'éviter un retour d'énergie électrique de la batterie 24 vers le panneau photovoltaïque 25, lorsque la valeur de la tension Vₚᵥ founie par le panneau photovoltaïque 25 est inférieure à une valeur de la tension V_{bat} fournie par la batterie 24.

En outre, la diode 48 permet de protéger le dispositif d'alimentation en énergie électrique 26 par rapport à une inversion du sens de câblage de la batterie 24 ou du panneau photovoltaïque 25.

Avantageusement, le transistor 41 comprend :
- une première broche 49, pouvant également être appelée « base » ou « broche de commande », la première broche 49 étant reliée électriquement au port de sortie 42 du microcontrôleur 31,
- une deuxième broche 50, pouvant également être appelée « collecteur » ou « broche d'entrée », la deuxième broche 50 étant connectée électriquement au point milieu 47 du pont diviseur de tension 44 et au port d'entrée 38 du microcontrôleur 31, et
- une troisième broche 51, pouvant également être appelée « émetteur » ou « broche de sortie », la troisième broche 51 étant reliée électriquement à la masse 52 de l'unité électronique de contrôle 15 et, plus particulièrement, de la carte électronique 55 de l'unité électronique de contrôle 15.

Ici, la première broche 49 du transistor 41 est configurée pour commander, autrement dit commande, le transistor 41, à partir d'un signal de commande S provenant du port de sortie 42 du microcontrôleur 31.

Lorsque le microcontrôleur 31 fournit la deuxième valeur de tension au niveau de son port de sortie 42, soit la valeur prédéterminée Vₛₐₜ de forçage, un courant est généré dans la première broche 49 du transistor 41. Ce courant généré dans la première broche 49 du transistor 41 autorise une circulation d'un courant à partir de la deuxième broche 50 vers la troisième broche 51 du transistor 41.

Ainsi, ce fonctionnement du dispositif d'alimentation énergie électrique 26 correspond à ce que le point milieu 47 du pont diviseur de tension 44 est relié électriquement à la masse 52 de l'unité électronique contrôle 15.

De cette manière, ce fonctionnement du transistor 41 permet de rendre impossible une lecture d'une mesure de la tension Vₚᵥ du panneau photovoltaïque 25 par le port d'entrée 38 du microcontrôleur 31.

Dans le cas contraire où le microcontrôleur 31 fournit la première valeur de tension au niveau de son port de sortie 42, soit la valeur de 0 volt dans l'exemple, aucun courant n'est généré dans la première broche 49 du transistor 41. Aucune circulation de courant n'est possible à partir de la deuxième broche 50 vers la troisième broche 51 du transistor 41.

Ainsi, ce fonctionnement du dispositif d'alimentation énergie électrique 26 correspond à ce que le point milieu 47 du pont diviseur de tension 44 est isolé électriquement de la masse 52 de l'unité électronique contrôle 15.

De cette manière, ce fonctionnement du transistor 41 permet de rendre possible une lecture d'une mesure de la tension Vₚᵥ du panneau photovoltaïque 25 par le port d'entrée 38 du microcontrôleur 31.

Avantageusement, l'unité électronique de contrôle 15 et, plus particulièrement, le dispositif d'inhibition 37 comprend, en outre, une résistance de protection 53. La résistance de protection 53 est reliée électriquement, d'une part, au port de sortie 42 du microcontrôleur 31 et, d'autre part, à la première broche 49 du transistor 41.

Ainsi, la résistance de protection 53 limite, autrement dit est configurée pour limiter, une valeur d'un courant généré par le port de sortie 42 du microcontrôleur 31 entrant dans la première broche 49 du transistor 41.

Avantageusement, l'unité électronique de contrôle 15 comprend, en outre, au moins un condensateur de filtrage 54. Le condensateur de filtrage 54 est relié électriquement, d'une part, au point milieu 47 du pont diviseur de tension 44, au port d'entrée 38 du microcontrôleur 31 et à la deuxième broche 50 du transistor 41 et, d'autre part, à la masse 52 de l'unité électronique de contrôle 15.

Ainsi, le condensateur de filtrage 54 limite, autrement dit est configuré pour limiter, un niveau de bruit lors de la mesure de la tension Vₚᵥ du panneau photovoltaïque 25 au moyen du dispositif de mesure 33 et, plus particulièrement, du pont diviseur de tension 44 et lors de la lecture de cette mesure par le microcontrôleur 31 et, plus particulièrement, par le port d'entrée 38 du microcontrôleur 31.

Avantageusement, le dispositif de mesure 33 de la tension Vₚᵥ du panneau photovoltaïque 25 permet, en particulier lors de la fabrication et/ou lors de la mise en service du dispositif d'entraînement motorisé 5, de mettre en oeuvre, notamment, une communication, autrement dit un échange de données, d'un outil de configuration, non représenté, avec le microcontrôleur 31, une vérification du fonctionnement du panneau photovoltaïque 25, une vérification du branchement du panneau photovoltaïque 25 avec la batterie 24 et l'unité électronique de contrôle 15 et une mise en veille profonde de l'unité électronique de contrôle 15 et, plus particulièrement, du microcontrôleur 31, notamment lors du transport du dispositif d'entraînement motorisé 5.

Avantageusement, l'unité électronique de contrôle 15 comprend, en outre, une unité de pilotage 56. En outre, l'unité de pilotage 56 est reliée électriquement au moteur électrique 16.

Ainsi, l'unité de pilotage 56 est configurée pour alimenter en énergie électrique, autrement dit alimente en énergie électrique, le moteur électrique 16.

Ici, la batterie 24 fournit la tension V_{bat} à l'unité de pilotage 56.

Avantageusement, le dispositif d'alimentation en énergie électrique 26 et, plus particulièrement, l'unité électronique de contrôle 15 comprend, en outre, une unité d'alimentation en énergie électrique auxiliaire 57.

Ainsi, l'unité d'alimentation en énergie électrique auxiliaire 57 est configurée pour alimenter en énergie électrique, autrement dit alimente en énergie électrique, l'unité électronique de contrôle 15, et plus particulièrement, le microcontrôleur 31 et le premier module de communication 27, ainsi que l'unité de pilotage 56.

Ici, l'unité d'alimentation en énergie électrique auxiliaire 57 est un convertisseur d'énergie électrique d'une première valeur de courant continu à une deuxième valeur de courant continu. La première valeur de courant continu est une tension d'entrée, correspondant à la tension d'alimentation V_{bat} fournie par la batterie 24. En outre, la deuxième valeur de courant continu est une tension de sortie, correspondant à une tension V_{dd} fournie à l'unité électronique de contrôle 15, et plus particulièrement, au microcontrôleur 31 et au premier module de communication 27.

A titre d'exemple nullement limitatif, la première valeur de courant continu est une tension pouvant être comprise entre 8 volts et 21 volts. En outre, la deuxième valeur de courant continu est une tension pouvant être de 3,3 volts, dite « stable ».

Avantageusement, l'unité électronique de contrôle 15 et, plus particulièrement, la carte électronique 55 de l'unité électronique de contrôle 15 comprend au moins la masse 52. En outre, le transistor 41, en particulier la troisième broche 51 du transistor 41, est relié électriquement à la masse 52, comme mentionné ci-dessus.

Par ailleurs, le panneau photovoltaïque 25, la batterie 24, le moteur électrique 16, la deuxième résistance 46 du point diviseur de tension 44, le condensateur de filtrage 54, l'unité de pilotage 56, l'unité d'alimentation en énergie électrique auxiliaire 57, le microcontrôleur 31 et le premier module de communication 27 sont chacun reliés à une masse et, plus particulièrement, à la masse 52 de l'unité électronique de contrôle 15.

On décrit à présent un mode d'exécution d'un procédé de commande en fonctionnement du dispositif d'entraînement motorisé 5, illustré aux figures 1 à 3, conforme à l'invention.

Le procédé de commande comprend au moins les étapes suivantes, de préférence exécutées dans l'ordre mentionné ci-dessous :
- forçage du port d'entrée 38 du microcontrôleur 31 à la valeur prédéterminée Vₛₐₜ par le transistor 41, et
- blocage de la valeur lue par le port d'entrée 38 du microcontrôleur 31 à la valeur prédéterminée Vₛₐₜ.

Avantageusement, le procédé de commande comprend une étape de mise en service du dispositif d'entraînement motorisé 5, préalablement à l'étape de forçage.

Grâce à la présente invention, le transistor permet d'inhiber le dispositif de mesure de la tension du panneau photovoltaïque, tout en maintenant continuellement connectés électriquement le dispositif de mesure et le panneau photovoltaïque.

En outre, le transistor rend, autrement dit est configuré pour rendre, impossible une lecture d'une mesure de la tension du panneau photovoltaïque par le port d'entrée du microcontrôleur, dès que le transistor est activé, autrement dit dès que le port d'entrée du microcontrôleur est forcé à la valeur prédéterminée.

De nombreuses modifications peuvent être apportées aux exemples de réalisation décrits précédemment, sans sortir du cadre de l'invention défini par les revendications.

En variante, non représentée, le dispositif d'alimentation en énergie électrique 26 comprend, en outre, un chargeur. Ce chargeur est configuré pour être branché, autrement dit est branché, sur une prise électrique murale, de sorte à recharger la batterie 24 à partir d'un réseau d'alimentation électrique du secteur. Ce chargeur forme une source d'alimentation en énergie électrique externe.

En variante, non représentée, le dispositif d'alimentation en énergie électrique 26 comprend, en outre, une batterie auxiliaire, la batterie auxiliaire étant configurée pour recharger la batterie 24. Ainsi, la batterie 24 peut être rechargée au moyen de la batterie auxiliaire formant une source d'alimentation en énergie électrique externe, en particulier dans le cas où le dispositif d'occultation 3 est éloigné d'une prise électrique murale. En outre, la batterie auxiliaire peut permettre de recharger une batterie d'autres équipements électriques, notamment nomades, tels que, par exemple, un téléphone portable ou un ordinateur portable. Par ailleurs, une telle batterie auxiliaire, peut présenter au moins deux sorties électriques, en particulier une première sortie délivrant une tension de 12 volts pour alimenter en énergie électrique la batterie 24 et une deuxième sortie délivrant une tension de 5 volts pour alimenter en énergie électrique d'autres équipements électriques, dits nomades.

En variante, non représentée, l'actionneur électromécanique 11 est inséré dans un rail, en particulier de section carrée ou rectangulaire, pouvant être ouvert à l'une ou à ses deux extrémités, en particulier dans la configuration assemblée du dispositif d'occultation 3. Par ailleurs, l'actionneur électromécanique 11 peut être configuré pour entraîner un arbre d'entraînement sur lequel s'enroule des cordons de déplacement et/ou d'orientation de l'écran 2, qui peut, avantageusement, être un store à lames dans ce cas.

En outre, les modes de réalisation et variantes envisagés peuvent être combinés pour générer de nouveaux modes de réalisation de l'invention, sans sortir du cadre de l'invention défini par les revendications.

## Revendications

1. Dispositif d'entraînement motorisé (5) comprenant au moins :
- un actionneur électromécanique (11),
- une unité électronique de contrôle (15), et
- un dispositif d'alimentation en énergie électrique (26),
l'actionneur électromécanique (11) comprenant au moins un moteur électrique (16),
le dispositif d'alimentation en énergie électrique (26) comprenant au moins :
- une batterie (24), l'unité électronique de contrôle (15) et le moteur électrique (16) étant alimentés en énergie électrique à partir de la batterie (24), et
- un panneau photovoltaïque (25), la batterie (24) étant alimentée en énergie électrique au moyen du panneau photovoltaïque (25),
l'unité électronique de contrôle (15) comprenant au moins :
- un microcontrôleur (31),
- un dispositif de mesure (33) d'une tension (Vₚᵥ) fournie par le panneau photovoltaïque (25), le dispositif de mesure (33) étant relié électriquement au panneau photovoltaïque (25), le microcontrôleur (31) comprenant au moins un port d'entrée (38) de lecture de la tension (Vₚᵥ) fournie par le panneau photovoltaïque (25) et mesurée par le dispositif de mesure (33), et
- un dispositif d'inhibition (37) du dispositif de mesure (33),
**caractérisé**
**en ce que** le dispositif d'inhibition (37) est relié électriquement, d'une part, au dispositif de mesure (33) et, d'autre part, au port d'entrée (38) du microcontrôleur (31),
**en ce que** le dispositif d'inhibition (37) comprend au moins un transistor (41),
et **en ce que** le transistor (41) est configuré pour forcer le port d'entrée (38) du microcontrôleur (31) à une valeur prédéterminée (Vₛₐₜ), de sorte à bloquer la valeur lue par le port d'entrée (38) du microcontrôleur (31) à la valeur prédéterminée (Vₛₐₜ).

2. Dispositif d'entraînement motorisé (5) selon la revendication 1, **caractérisé en ce que** le transistor (41) est configuré pour forcer le port d'entrée (38) du microcontrôleur (31) à la valeur prédéterminée (Vₛₐₜ) suite à la mise en service du dispositif d'entraînement motorisé (5).

3. Dispositif d'entraînement motorisé (5) selon la revendication 2, **caractérisé**
**en ce que** l'unité électronique de contrôle (15) comprend, en outre, une diode (48), la diode (48) étant reliée électriquement, d'une part, au panneau photovoltaïque (25) et, d'autre part, à la batterie (24),
**en ce que** le dispositif de mesure (33) est relié électriquement, d'une part, à une liaison électrique (L24-25) entre le panneau photovoltaïque (25) et la batterie (24) et, d'autre part, à une masse (52), en parallèle au panneau photovoltaïque (25) et à la batterie (24),
et **en ce que** le dispositif de mesure (33) est connecté électriquement au panneau photovoltaïque (25) et à la diode (48).

4. Dispositif d'entraînement motorisé (5) selon l'une quelconque des revendications 1 à 3, **caractérisé en ce que** le dispositif de mesure (33) comprend au moins un pont diviseur de tension (44).

5. Dispositif d'entraînement motorisé (5) selon l'une quelconque des revendications 1 à 4, **caractérisé**
**en ce que** le microcontrôleur (31) comprend, en outre, au moins un port de sortie (42) de commande du transistor (41),
et **en ce que** le transistor (41) est configuré pour forcer le port d'entrée (38) du microcontrôleur (31) à la valeur prédéterminée (Vₛₐₜ) suite à une commande de forçage à la valeur prédéterminée (Vₛₐₜ) émise par le port de sortie (42) du microcontrôleur (31) au transistor (41).

6. Dispositif d'entraînement motorisé (5) selon la revendication 4 et selon la revendication 5, **caractérisé**
**en ce que** le transistor (41) comprend :
- une première broche (49), la première broche (49) étant reliée électriquement au port de sortie (42) du microcontrôleur (31),
- une deuxième broche (50), la deuxième broche (50) étant connectée électriquement à un point milieu (47) du pont diviseur de tension (44) et au port d'entrée (38) du microcontrôleur (31), et
- une troisième broche (51), la troisième broche (51) étant reliée électriquement à une masse (52) de l'unité électronique de contrôle (15).

7. Dispositif d'entraînement motorisé (5) selon la revendication 6, **caractérisé en ce que** l'unité électronique de contrôle (15) comprend, en outre, une résistance de protection (53), la résistance de protection (53) étant reliée électriquement, d'une part, au port de sortie (42) du microcontrôleur (31) et, d'autre part, à la première broche (49) du transistor (41).

8. Dispositif d'occultation (3) comprenant au moins :
- un écran (2), et
- un dispositif d'entraînement motorisé (5),
**caractérisé en ce que** le dispositif d'entraînement motorisé (5) est conforme à l'une quelconque des revendications 1 à 7, l'écran (2) étant configuré pour être entraîné en déplacement par l'actionneur électromécanique (11) du dispositif d'entraînement motorisé (5).

9. Dispositif d'occultation (3) selon la revendication 8, **caractérisé**
**en ce que** le dispositif d'occultation (3) comprend, en outre, un tube d'enroulement (4),
**en ce que** l'écran (2) est enroulable sur le tube d'enroulement (4),
et **en ce que** le tube d'enroulement (4) est agencé de sorte à être entraîné en rotation par l'actionneur électromécanique (11).

10. Procédé de commande en fonctionnement d'un dispositif d'entraînement motorisé (5),
le dispositif d'entraînement motorisé (5) comprenant au moins :
- un actionneur électromécanique (11),
- une unité électronique de contrôle (15), et
- un dispositif d'alimentation en énergie électrique (26),
l'actionneur électromécanique (11) comprenant au moins un moteur électrique (16),
le dispositif d'alimentation en énergie électrique (26) comprenant au moins :
- une batterie (24), l'unité électronique de contrôle (15) et le moteur électrique (16) étant alimentés en énergie électrique à partir de la batterie (24), et
- un panneau photovoltaïque (25), la batterie (24) étant alimentée en énergie électrique au moyen du panneau photovoltaïque (25),
l'unité électronique de contrôle (15) comprenant au moins :
- un microcontrôleur (31),
- un dispositif de mesure (33) d'une tension (Vₚᵥ) fournie par le panneau photovoltaïque (25), le dispositif de mesure (33) étant relié électriquement au panneau photovoltaïque (25), le microcontrôleur (31) comprenant au moins un port d'entrée (38) de lecture de la tension (Vₚᵥ) fournie par le panneau photovoltaïque (25) et mesurée par le dispositif de mesure (33), et
- un dispositif d'inhibition (37) du dispositif de mesure (33),
**caractérisé**
**en ce que** le dispositif d'inhibition (37) est relié électriquement, d'une part, au dispositif de mesure (33) et, d'autre part, au port d'entrée (38) du microcontrôleur (31),
**en ce que** le dispositif d'inhibition (37) comprend au moins un transistor (41),
et **en ce que** le procédé comprend au moins les étapes suivantes :
- forçage du port d'entrée (38) du microcontrôleur (31) à une valeur prédéterminée (Vₛₐₜ) par le transistor (41), et
- blocage de la valeur lue par le port d'entrée (38) du microcontrôleur (31) à la valeur prédéterminée (Vₛₐₜ).

## Patentansprüche

1. Motorisierte Antriebsvorrichtung (5) mindestens umfassend:
- einen elektromechanischen Aktuator (11),
- eine elektronische Steuereinheit (15), und
- eine Versorgungsvorrichtung elektrischer Energie (26),
der elektromechanische Aktuator (11) umfassend mindestens einen Elektromotor (16),
die Versorgungsvorrichtung elektrischer Energie (26) mindestens umfassend:
- eine Batterie (24), wobei die elektronische Steuereinheit (15) und der Elektromotor (16) von der Batterie (24) mit elektrischer Energie versorgt werden, und
- ein Solarmodul (25), wobei die Batterie (24) mittels des Solarmoduls (25) mit elektrischer Energie versorgt wird,
die elektronische Steuereinheit (15) mindestens umfassend:
- einen Mikrocontroller (31),
- eine Vorrichtung (33) zum Messen einer Spannung (Vₚᵥ), die von dem Solarmodul (25) zugeführt wird, wobei die Messvorrichtung (33) elektrisch mit dem Solarmodul (25) verbunden ist, der Mikrocontroller (31) umfassend mindestens einen Eingangsanschluss (38) zum Lesen der Spannung (Vₚᵥ), die von dem Solarmodul (25) zugeführt und von der Messvorrichtung (33) gemessen wird, und
- eine Sperrvorrichtung (37) der Messvorrichtung (33),
**dadurch gekennzeichnet,**
**dass** die Sperrvorrichtung (37) einerseits elektrisch mit der Messvorrichtung (33) und andererseits mit dem Eingangsanschluss (38) des Mikrocontrollers (31) verbunden ist, dass die Sperrvorrichtung (37) mindestens einen Transistor (41) umfasst,
und **dass** der Transistor (41) konfiguriert ist, um den Eingangsanschluss (38) des Mikrocontrollers (31) auf einen vorbestimmten Wert (Vₛₐₜ) zu forcieren, um den von dem Eingangsanschluss (38) des Mikrocontrollers (31) gelesenen Wert auf dem vorbestimmten Wert (Vₛₐₜ) zu blockieren.

2. Motorisierte Antriebsvorrichtung (5) nach Anspruch 1, **dadurch gekennzeichnet, dass** der Transistor (41) konfiguriert ist, um den Eingangsanschluss (38) des Mikrocontrollers (31) nach der Inbetriebnahme der motorisierten Antriebsvorrichtung (5) auf den vorbestimmten Wert (Vₛₐₜ) zu forcieren.

3. Motorisierte Antriebsvorrichtung (5) nach Anspruch 2, **dadurch gekennzeichnet, dass** die elektronische Steuereinheit (15) ferner eine Diode (48) umfasst, wobei die Diode (48) einerseits elektrisch mit dem Solarmodul (25) und andererseits mit der Batterie (24) verbunden ist,
dass die Messvorrichtung (33) einerseits elektrisch mit einer elektrischen Verbindung (L24-25) zwischen dem Solarmodul (25) und der Batterie (24) und andererseits mit einer Masse (52) parallel zu dem Solarmodul (25) und zu der Batterie (24) verbunden ist, und dass die Messvorrichtung (33) elektrisch mit dem Solarmodul (25) und der Diode (48) verbunden ist.

4. Motorisierte Antriebsvorrichtung (5) nach einem der Ansprüche 1 bis 3, **dadurch gekennzeichnet, dass** die Messvorrichtung (33) mindestens eine Spannungsteilerbrücke (44) umfasst.

5. Motorisierte Antriebsvorrichtung (5) nach einem der Ansprüche 1 bis 4, **dadurch gekennzeichnet,**
**dass** der Mikrocontroller (31) ferner mindestens einen Ausgangsanschluss (42) zum Steuern des Transistors (41) umfasst,
und **dass** der Transistor (41) konfiguriert ist, um den Eingangsanschluss (38) des Mikrocontrollers (31) nach einem Befehl zum Forcieren auf den vorbestimmten Wert (Vₛₐₜ), der von dem Ausgangsanschluss (42) des Mikrocontrollers (31) an den Transistor (41) ausgegeben wird, auf den vorbestimmten Wert (Vₛₐₜ) zu forcieren.

6. Motorisierte Antriebsvorrichtung (5) nach Anspruch 4 und nach Anspruch 5, **dadurch gekennzeichnet,**
**dass** der Transistor (41) Folgendes umfasst:
- einen ersten Stift (49), wobei der erste Stift (49) elektrisch mit dem Ausgangsanschluss (42) des Mikrocontrollers (31) verbunden ist,
- einen zweiten Stift (50), wobei der zweite Stift (50) elektrisch mit einem Mittelpunkt (47) der Spannungsteilerbrücke (44) und dem Eingangsanschluss (38) des Mikrocontrollers (31) verbunden ist, und
- einen dritten Stift (51), wobei der dritte Stift (51) elektrisch mit einer Masse (52) der elektronischen Steuereinheit (15) verbunden ist.

7. Motorisierte Antriebsvorrichtung (5) nach Anspruch 6, **dadurch gekennzeichnet, dass** die elektronische Steuereinheit (15) ferner einen Schutzwiderstand (53) umfasst, wobei der Schutzwiderstand (53) elektrisch einerseits mit dem Ausgangsanschluss (42) des Mikrocontrollers (31) und andererseits mit dem ersten Stift (49) des Transistors (41) verbunden ist.

8. Verdunkelungsvorrichtung (3) mindestens umfassend:
- eine Blende (2), und
- eine motorisierte Antriebsvorrichtung (5) und
**dadurch gekennzeichnet, dass** die motorisierte Antriebsvorrichtung (5) gemäß einem der Ansprüche 1 bis 7 ist, wobei die Blende (2) konfiguriert ist, um durch den elektromechanischen Aktuator (11) der motorisierten Antriebsvorrichtung (5) in Bewegung versetzt zu werden.

9. Verdunkelungsvorrichtung (3) nach Anspruch 8, **dadurch gekennzeichnet,**
**dass** die Verdunkelungsvorrichtung (3) zusätzlich ein Wickelrohr (4) umfasst,
**dass** die Blende (2) auf das Wickelrohr (4) aufwickelbar ist,
wobei das Wickelrohr (4) so angeordnet ist, dass es durch den elektromechanischen Stellantrieb (11) in Drehung versetzt wird.

10. Betriebssteuerverfahren einer motorisierten Antriebsvorrichtung (5), die motorisierte Antriebsvorrichtung (5) mindestens umfassend:
- einen elektromechanischen Aktuator (11),
- eine elektronische Steuereinheit (15), und
- eine Versorgungsvorrichtung elektrischer Energie (26),
der elektromechanische Aktuator (11) umfassend mindestens einen Elektromotor (16),
die Versorgungsvorrichtung elektrischer Energie (26) mindestens umfassend:
- eine Batterie (24), wobei die elektronische Steuereinheit (15) und der Elektromotor (16) von der Batterie (24) mit elektrischer Energie versorgt werden, und
- ein Solarmodul (25), wobei die Batterie (24) mittels des Solarmoduls (25) mit elektrischer Energie versorgt wird,
die elektronische Steuereinheit (15) mindestens umfassend:
- einen Mikrocontroller (31),
- eine Vorrichtung (33) zum Messen einer Spannung (Vₚᵥ), die von dem Solarmodul (25) zugeführt wird, wobei die Messvorrichtung (33) elektrisch mit dem Solarmodul (25) verbunden ist, der Mikrocontroller (31) umfassend mindestens einen Eingangsanschluss (38) zum Lesen der Spannung (Vₚᵥ), die von dem Solarmodul (25) zugeführt und von der Messvorrichtung (33) gemessen wird, und
- eine Sperrvorrichtung (37) der Messvorrichtung (33),
**dadurch gekennzeichnet,**
**dass** die Sperrvorrichtung (37) einerseits elektrisch mit der Messvorrichtung (33) und andererseits mit dem Eingangsanschluss (38) des Mikrocontrollers (31) verbunden ist, dass die Sperrvorrichtung (37) mindestens einen Transistor (41) umfasst,
und **dass** das Verfahren mindestens die folgenden Schritte umfasst:
- Forcieren des Eingangsanschlusses (38) des Mikrocontrollers (31) auf einen vorbestimmten Wert (Vₛₐₜ) durch den Transistor (41), und
- Blockieren des von dem Eingangsanschluss (38) des Mikrocontrollers (31) gelesenen Werts auf dem vorbestimmten Wert (Vₛₐₜ).

## Claims

1. A motorised driving device (5) comprising at least:
- an electromechanical actuator (11),
- an electronic control unit (15), and
- an electrical power supply device (26),
the electromechanical actuator (11) comprising at least one electric motor (16),
the electrical power supply device (26) comprising at least:
- a battery (24), the electronic control unit (15) and the electric motor (16) being supplied with electrical energy from the battery (24), and
- a photovoltaic panel (25), the battery (24) being supplied with electrical energy by means of the photovoltaic panel (25),
the electronic control unit (15) comprising at least:
- a microcontroller (31),
- a device (33) for measuring a voltage (Vₚᵥ) supplied by the photovoltaic panel (25), the measuring device (33) being electrically connected to the photovoltaic panel (25), the microcontroller (31) comprising at least one input port (38) for reading the voltage (Vₚᵥ) supplied by the photovoltaic panel (25) and measured by the measuring device (33), and
- a device (37) for inhibiting the measuring device (33),
**characterised**
**in that** the inhibiting device (37) is electrically connected, on the one hand, to the measuring device (33) and, on the other hand, to the input port (38) of the microcontroller (31),
**in that** the inhibiting device (37) comprises at least one transistor (41),
and **in that** the transistor (41) is configured to force the input port (38) of the microcontroller (31) to a predetermined value (Vₛₐₜ), so as to block the value read by the input port (38) of the microcontroller (31) at the predetermined value (Vₛₐₜ).

2. The motorised driving device (5) according to claim 1, **characterised in that** the transistor (41) is configured to force the input port (38) of the microcontroller (31) to the predetermined value (Vₛₐₜ) following commissioning of the motorised driving device (5).

3. The motorised driving device (5) according to claim 2, **characterised**
**in that** the electronic control unit (15) further comprises a diode (48), the diode (48) being electrically connected, on the one hand, to the photovoltaic panel (25) and, on the other hand, to the battery (24),
**in that** the measuring device (33) is electrically connected, on the one hand, to an electrical link (L24-25) between the photovoltaic panel (25) and the battery (24) and, on the other hand, to a ground (52), in parallel with the photovoltaic panel (25) and the battery (24),
and **in that** the measuring device (33) is electrically connected to the photovoltaic panel (25) and to the diode (48).

4. The motorised driving device (5) according to any one of claims 1 to 3, **characterised in that** the measuring device (33) comprises at least one voltage divider bridge (44).

5. The motorised driving device (5) according to any one of claims 1 to 4, **characterised**
**in that** the microcontroller (31) further comprises at least one output port (42) for controlling the transistor (41),
and **in that** the transistor (41) is configured to force the input port (38) of the microcontroller (31) to the predetermined value (Vₛₐₜ) following a command to force to the predetermined value (Vₛₐₜ) sent by the output port (42) of the microcontroller (31) to the transistor (41).

6. The motorised driving device (5) according to claim 4 and according to claim 5, **characterised**
**in that** the transistor (41) comprises:
- a first pin (49), the first pin (49) being electrically connected to the output port (42) of the microcontroller (31),
- a second pin (50), the second pin (50) being electrically connected to a midpoint (47) of the voltage divider bridge (44) and to the input port (38) of the microcontroller (31), and
- a third pin (51), the third pin (51) being electrically connected to a ground (52) of the electronic control unit (15).

7. The motorised driving device (5) according to claim 6, **characterised in that** the electronic control unit (15) further comprises a protective resistor (53), the protective resistor (53) being electrically connected, on the one hand, to the output port (42) of the microcontroller (31) and, on the other hand, to the first pin (49) of the transistor (41).

8. An occultation device (3) comprising at least:
- a screen (2), and
- a motorised driving device (5),
**characterised in that** the motorised driving device (5) is according to any one of claims 1 to 7, the screen (2) being configured to be driven in displacement by the electromechanical actuator (11) of the motorised driving device (5).

9. The occultation device (3) according to claim 8, **characterised**
**in that** the occultation device (3) further comprises a winding tube (4),
**in that** the screen (2) can be rolled onto the winding tube (4),
and **in that** the winding tube (4) is arranged to be rotated by the electromechanical actuator (11).

10. A method for controlling operation of a motorised driving device (5),
the motorised driving device (5) comprising at least:
- an electromechanical actuator (11),
- an electronic control unit (15), and
- an electrical power supply device (26),
the electromechanical actuator (11) comprising at least one electric motor (16),
the electrical power supply device (26) comprising at least:
- a battery (24), the electronic control unit (15) and the electric motor (16) being supplied with electrical energy from the battery (24), and
- a photovoltaic panel (25), the battery (24) being supplied with electrical energy by means of the photovoltaic panel (25),
the electronic control unit (15) comprising at least:
- a microcontroller (31),
- a device (33) for measuring a voltage (Vₚᵥ) supplied by the photovoltaic panel (25), the measuring device (33) being electrically connected to the photovoltaic panel (25), the microcontroller (31) comprising at least one input port (38) for reading the voltage (Vₚᵥ) supplied by the photovoltaic panel (25) and measured by the measuring device (33), and
- a device (37) for inhibiting the measuring device (33),
**characterised**
**in that** the inhibiting device (37) is electrically connected, on the one hand, to the measuring device (33) and, on the other hand, to the input port (38) of the microcontroller (31),
**in that** the inhibiting device (37) comprises at least one transistor (41),
and **in that** the method comprises at least the following steps:
- forcing the input port (38) of the microcontroller (31) to a predetermined value (Vₛₐₜ) by the transistor (41), and
- blocking the value read by the input port (38) of the microcontroller (31) at the predetermined value (Vₛₐₜ).
